# EUROPÄISCHE PATENTSCHRIFT

(11) **EP 1 482 623 B1**
(45) Veröffentlichungstag und Bekanntmachung des Hinweises auf die Patenterteilung: **12.07.2017**
(21) Anmeldenummer: 04101950.6
(22) Anmeldetag: 06.05.2004
(51) Int. Cl.: B08B 1/00, H02K 15/00

(54) **Vorrichtung und Verfahren zur mechanischen Nutreinigung**
Device and method for the mechanical cleaning of grooves
Dispositif et procédé pour le nettoyage mécanique de rainures

(30) Priorität: 27.05.2003 DE 10324317
(43) Veröffentlichungstag der Anmeldung: 01.12.2004
(73) Patentinhaber: General Electric Technology GmbH, 5400 Baden (CH)
(72) Erfinder: Meier, Walter, 5622, Waltenschwil (CH); Studer, Ralph, 5703, Seon (CH)
(74) Vertreter: General Electric Technology GmbH

(56) Entgegenhaltungen:
- WO-A-2004/043638
- CA-A1- 2 196 448
- JP-A- H10 193 128
- US-A- 5 044 612
- US-A- 5 610 754

## Beschreibung

### Technisches Gebiet

Die Erfindung betrifft eine Vorrichtung und ein Verfahren zum mechanischen Reinigen von Nuten, die zur Aufnahme von Rotor- oder Statorwicklungen einer elektrischen Maschine vorgesehen sind.

### Stand der Technik

Es ist bei der Auslegung von Motoren und Generatoren mit hoher Qualität und langer Lebensdauer bekannt, ein elektrisches Isoliersystem zu verwenden, dass die meist verschiedenartigen elektrischen, mechanischen und umweltbedingten Anforderungen erfüllt. Dabei wird zur Vakuum-Imprägnierung und Aushärtung des vollständig bewickelten Stators bzw. Rotors ein spezielles modifiziertes Epoxyharz verwendet, dass eine hohlraumfreie Isolierung mit versiegelten Oberflächen ergibt. Insbesondere bei derartigen Wicklungen müssen zunächst die von den alten Bewicklungen befreiten Stator- beziehungsweise Rotorspulen gereinigt werden, bevor sie mit neuen Wicklungen ausgestattet werden können. Bisweilen müssen hierbei zunächst die Epoxyharze, die beim Imprägnieren und Druckverfestigungsverfahren zwischen Statorstab und Blechpaket eingespritzt werden, entfernt werden. Diese Arbeit ist insbesondere bei schmalen und tiefen Wicklungsnuten schwierig auszuführen, da das Harz entfernt werden muss, ohne das Blechpaket zu beschädigen.

Zu diesem Zweck sind bereits Reinigungsvorrichtungen und -verfahren erprobt worden, die jedoch alle erhebliche Nachteile aufweisen. So wird beispielsweise nach einem bekannten Verfahren eine Trockeneisreinigung vorgenommen, dass heißt hierbei wird das an den Nutwänden anhaftende Epoxyharz durch Trockeneis versprödet und dann manuell entfernt. Diese Technik ist in erster Linie teuer und in sehr warmen bzw. tropischen Ländern unökonomisch. Ein weiteres bekanntes Verfahren schlägt die Reinigung der Nuten mittels Handbandschleifmaschine vor. Hierbei besteht die Gefahr der Beschädigung des Blechpaketes und zum anderen ergibt sich bei engen Nuten die Problematik der vollständigen Erreichbarkeit sämtlicher Punkte. Schließlich ist noch ein manuelles Abkratzen beziehungsweise Abschaben der Epoxyharzreste möglich, jedoch besteht auch hier die Gefahr der Beschädigung des Blechpaketes und die schwierige Zugänglichkeit bei engen und langen Nuten. Außerdem lassen sich diese Reinigungsverfahren schlecht automatisieren und erfordern kostenintensive manuelle Bearbeitung. Das Dokument CA 2196448 C offenbart eine mechanische Nutreinigungsvorrichtung gemäß dem Oberbegriff des Anspruchs 1. Die Druckschrift JP-A-10193128 beschreibt ein Wartungswerkzeug mit einem Schaberblock, der mit einer stark angewinkelten Klinge zum Abschaben von Schweissrückständen ausgestattet ist. Die Klinge befindet sich in der Nähe zu einer Düse am Ende einer Rohrs zum Ausstossen von Pressluft.

### Darstellung der Erfindung

Der Erfindung liegt daher die Aufgabe zugrunde, die obengenannten Nachteile des Standes der Technik zu vermeiden und eine Vorrichtung und ein Verfahren zum Reinigen von Nuten in einem Blechkörper zur Aufnahme von Rotor-/Statorwicklungen einer elektrischen Maschine bereit zu stellen. Dabei soll die erfindungsgemäße Vorrichtung und das erfindungsgemäße Verfahren die Reinigung der Nut auf sichere mechanische Weise ohne Beschädigung der laminierten Beblechung des Rotors/Stators ermöglichen. Insbesondere sollen die Vorrichtungen und das Verfahren zur Reinigung von Nuten geeignet sein, bei denen eine neue Wicklung in den bestehenden Blechkörper eingebaut werden soll, beispielsweise bei Retrofitprogrammen bei Generatoren.

Diese Aufgabe wird durch die Merkmale der unabhängigen Ansprüche gelöst. Weitere vorteilhafte Ausgestaltungen sind in den Unteransprüchen angegeben.

Gemäß der erfindungsgemäßen Vorrichtung und dem erfindungsgemäßen Verfahren wird die Nut durch eine Art feines Schneiden der Verklebungen gereinigt. Es handelt sich also nicht um ein Abschleifen oder ein "Beschießen", beispielsweise durch Trockeneis oder durch Baumnusskerne, der zu reinigenden Oberfläche, sondern im wesentlichen um ein feines Schneiden bzw. Hobeln. Der Reinigungsvorgang erfolgt dabei automatisch. Die Richtungsbezeichnungen axial und radial beziehen sich dabei auf die Rotor-/Statorlängsachse.

Das Schneiden erfolgt durch eine auf und ab Bewegung, die beispielsweise mit Hilfe eines Kolbens durchgeführt wird. Hierdurch wird das Reinigungswerkzeug in radialer Richtung, bezogen auf den Stator oder Rotor, bewegt, damit das Blech nicht beschädigt wird. Bei diesem auch als Hobeln bezeichneten Reinigungsvorgang, erfolgt gleichzeitig eine stoßende und ziehende Bewegung des Reinigungswerkzeuges entlang der Nut.

Eine vorteilhafte Ausführungsform der vorliegenden Erfindung sieht vor, dass zwei oder mehr Reinigungswerkzeuge zur parallelen Reinigung einer Nutwand vorhanden sind. Diese können beispielsweise durch eine entsprechende Anzahl von Hubzylindern hydraulisch angetrieben werden.

Eine alternative Ausführungsform sieht vor, dass zwei oder mehr Reinigungswerkzeuge zur parallelen Reinigung sich gegenüberliegender Nutwände vorgesehen sind. Hierdurch kann eine Nut beispielsweise in einem Reinigungsschritt vollständig von Harzresten befreit werden.

Gemäß der Ausführungsform der erfindungsgemäßen Vorrichtung bewegt sich eine mobile Einheit, der Vorrichtungsträger, auf Führungseinrichtungen in axialer Richtung über die gesamte Länge der Nut. Die Führungseinrichtungen sind bei der Anwendung an einem Stator am Innenumfang und bei der Anwendung an einem Rotor am Außenumfang angebracht. Die Führungsmittel sind als Schienenpaar vorgesehen, können aber, nicht erfindungsgemäß, beispielsweise auch als Monorail ausgebildet sein. Je nach Antriebsart kann auch eine Verzahnung an der Führungseinrichtung, quasi wie bei einer Zahnradbahn, vorgesehen sein.

Eine besonders vorteilhafte Weiterbildung der erfindungsgemäßen Vorrichtung sieht vor, dass Einstellmittel zum Einstellen und Justieren des Hubs und der Schnitttiefe sowie der Nutbreite des zumindest einen Reinigungswerkzeugs vorgesehen sind. Die Schnitttiefe des Reinigungswerkzeugs ist derart einstellbar, dass sie den Verhältnissen der Reinigungsvorrichtung und den Nutverhältnissen angepasst werden kann. Damit wird verhindert, dass die Isolationsstrecke zwischen den laminierten Blechen beschädigt wird. Ferner wird hierdurch die Spangröße und dadurch die Schnittgeschwindigkeit bestimmt.

Schließlich sieht eine weitere vorteilhafte Weiterbildung der erfindungsgemäßen Vorrichtung vor, dass Einstellmittel zum Einstellen der Vorschubgeschwindigkeit in Abhängigkeit von der Hub- bzw. Drehbewegung des zumindest einen Reinigungswerkzeugs vorhanden sind. Dies ist erforderlich, um die axiale und radiale Bewegung aufeinander abzustimmen und dadurch ein gutes Reinigungsergebnis zu erhalten. Die Einstellung kann beispielsweise dadurch erfolgen, dass bei einem Schrittantrieb die Anzahl der radialen Hübe vorgegeben wird, bevor der axiale Vorschub erfolgt. Anspruch 7 stellt das erfindungsgemäße Verfahren dar. Ein derartiges Verfahren zum mechanischen Reinigen von Nuten mittels einer Vorrichtung zum mechanischen Reinigen von Nuten, die zur Aufnahme von Rotor- oder Statorwicklungen einer elektrischen Maschine vorgesehen sind, wobei die Vorrichtung einen axial beweglichen Vorrichtungsträger mit zumindest einem damit verbundenen Reinigungswerkzeug aufweist, das sich vom Vorrichtungsträger radial in jeweils eine Nut erstreckt, weist folgende Schritte auf: a) Mechanisches Abtragen von Verunreinigungen an einem Nutwandabschnitt mit zumindest einem Reinigungswerkzeug; b) Axialer Vorschub des Vorrichtungsträgers, d.h. parallel zur Rotor- bzw. Statormittellinie, wobei die radiale Bewegung, d.h. die Bewegung entlang der Nuthöhe, des zumindest einen Reinigungswerkzeugs und die axiale Bewegung des Vorrichtungsträgers aufeinander abgestimmt sind; und c) Einstellen der Nutmasstoleranzbreite durch Justieren des Reinigungswerkzeugs. Das Reinigungsverfahren läuft dabei, nach entsprechendem Aufbau und Einrichtung der Vorrichtung, automatisch ab. Die Axialbewegung wird durch Führungsschienen geführt. Der Vorschub erfolgt dabei beispielsweise mittels eines pneumatisch gesteuerten Kettenantriebs, mittels eines Elektromotors über einen Zahnstangentrieb oder aber über einen Seilantrieb.

Eine vorteilhafte Ausgestaltung des erfindungsgemäßen Verfahrens sieht vor, dass die Vorschubbewegung schrittweise erfolgt, wobei pro Schritt zumindest eine Hubbewegung des Reinigungswerkzeugs, vorzugsweise mehrere Hübe, in radialer Richtung durchgeführt wird/werden. Hierdurch wird eine vollständige und zuverlässige Reinigung sichergestellt.

### Kurze Beschreibung der Zeichnungen

Im folgenden ist eine vorteilhafte Ausführungsform der Erfindung in Verbindung mit den beigefügten Zeichnungen beschrieben. Darin zeigen:
- Figur 1: eine perspektivische Ansicht einer ersten Ausführungsform einer erfindungsgemäßen Nutreinigungsvorrichtung;
- Figur 2: die schematische Detailansicht II aus Figur 1 eines erfindungsgemäßen Reinigungswerkzeugs;
- Figur 3: eine schematische Detailansicht einer zweiten Ausführungsform einer zweiten erfindungsgemäßen Nutreinigungsvorrichtung mit zwei Reinigungswerkzeugen;
- Figur 4: eine perspektivische Ansicht einer zweiten Ausführungsform einer erfindungsgemäßen Nutreinigungsvorrichtung;
- Figur 5: eine perspektivische Ansicht einer zweiten Ausführungsform von zwei hintereinander angeordneten Reinigungswerkzeugen.

Es sind nur die für das Verständnis der Erfindung wesentlichen Elemente gezeigt. In der nachfolgenden Beschreibung sind gleiche oder ähnliche Teile mit gleichen Bezugszeichen gekennzeichnet. Die Richtungsangaben axial und radial beziehen sich hier auf die Statorlängsachse.

### Wege zur Ausführung der Erfindung

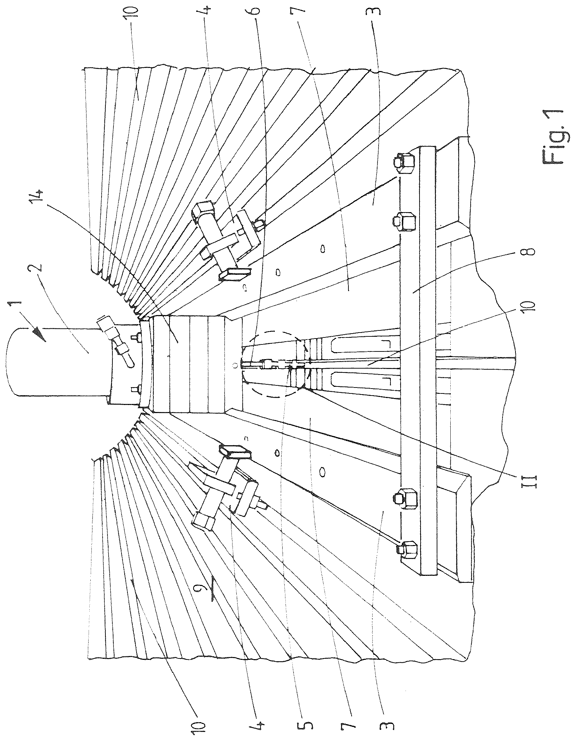

Figur 1 zeigt eine perspektivische Ansicht einer ersten Ausführungsform einer erfindungsgemäßen Nutreinigungsvorrichtung 1. Diese ist im Innenradius einer freigelegten Statorblechung 9 eines elektrischen Generators angebracht. Dabei sind, bezogen auf die Statormittellinie, zwei als axiale Führungsschienen 3 ausgebildete Führungsmittel vorgesehen, die parallel zueinander angeordnet sind. Die Führungsschienen 3 werden durch Stützen 4 auf der Statorblechung 9 befestigt und durch am vorderen und am hinteren Ende angeordnete Querstreben 8 fixiert.

Durch die Führungsschienen 3 wird ein Vorrichtungsträger 14 geführt, der auf mit den Führungsschienen 3 verbundenen Gleitplatten 7 aufsitzt. Der Vorrichtungsträger 14 ist mittig über der zu bearbeitenden Statornut 10 angebracht, aus der die Wicklung bereits entnommen wurde. Auf dem Vorrichtungsträger 14 sitzt ein Bewegungskolben 2.

Der Bewegungskolben 2 dient der auf und ab Bewegung der Kolbenstange 6 an deren unteren Ende ein Reinigungswerkzeug 5 angeordnet ist.

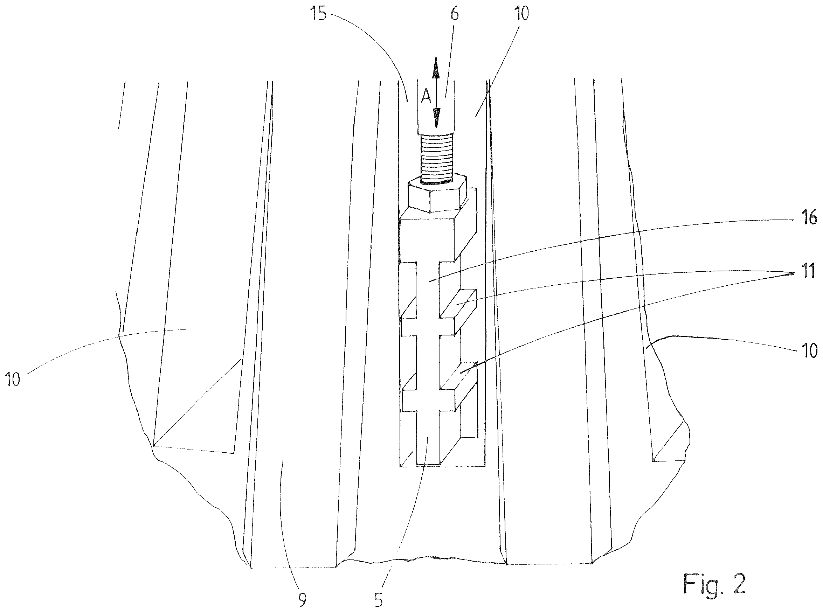

Figur 2 zeigt die schematische Detailvergrößerung II des Reinigungswerkzeugs 5 aus Figur 1. Dabei sind neben der Kolbenstange 6 die horizontalen Schneidflächen 11 des Reinigungswerkzeugs 5 dargestellt, die von dem Werkzeugkörper 16 nach rechts und links hervorstehen.

Zur Reinigung der Statornut 10 wird die Vorschubgeschwindigkeit der Nutreinigungsvorrichtung 1 in Abhängigkeit von der Hubgeschwindigkeit des Reinigungswerkzeugs 5 eingestellt. Das heißt, die Axialbewegung des Vorrichtungsträgers 14 wird so bestimmt, dass die Kolbenstange 6 zumindest einen vollen Hub, vorzugsweise mehrerer Hübe, an einem Nutwandabschnitt durchführt, bevor er an den nächsten Nutwandabschnitt verfahren wird. Die Justierung des Reinigungswerkzeugs 5 erfolgt dabei derart in der Statornut 10, dass das Reinigungswerkzeug 5 horizontal so verschoben wird, dass die Schneidflächen 11 an einer Nutwand 15 anliegen, womit gleichzeitig die Nutmasstoleranzbreite eingestellt ist.

Im Betrieb wird die Statornut 10 durch eine Art feines Schneiden oder Hobeln der Verklebung durch das Reinigungswerkzeug 5 gereinigt. Es erfolgt gleichzeitig eine stoßende und ziehende Bewegung des Reinigungswerkzeuges 5 entlang der Statornut 10 in axialer Richtung. Die Hubbewegung des Reinigungswerkzeugs 5 erfolgt dabei in Pfeilrichtung A. Außerdem bewegt sich der mobile Vorrichtungsträger 14 auf den Führungsschienen 3 in axialer Richtung. Die Harzreste werden so auf einer Seite der Statornut schonend abgetragen. Die abgetragenen Harzreste fallen durch die Ventilationsschlitze und werden ausgeblasen. Am Ende dieses Reinigungsabschnitts wird das Reinigungswergzeug 5 erneut justiert, so dass es an der noch nicht gereinigten Nutwand 15 anliegt und der Nutreinigungsvorgang wird, wie bereits oben beschrieben, erneut für die zweite Nutwand 15 durchgeführt. Die Einstellung bzw. Justierung der Nutreinigungsvorrichtung 1 erfolgt dabei von außerhalb des Stators über eine pneumatische Steuerung.

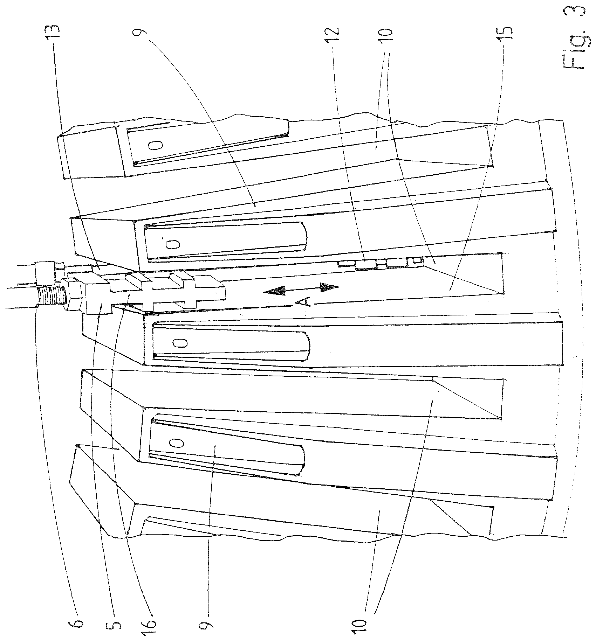

Figur 3 zeigt eine schematische Detailansicht einer zweiten Ausführungsform einer erfindungsgemäßen Nutreinigungsvorrichtung mit einem ersten Reinigungswerkzeug 5 und einem zweiten Reinigungswerkzeug 12. Die beiden Reinigungswerkzeuge 5, 12 sind dabei in axialer Richtung hintereinander angeordnet.

Durch die hintereinander Anordnung der Reinigungswerkzeuge 5, 12 lassen sich zwei Abschnitte einer Nutwand 15 parallel reinigen, wodurch die Schritte der im vorliegenden Ausführungsbeispiel schrittweisen Vorschubbewegung größer gewählt werden können. Alternativ kann das zweite Reinigungswerkzeug 12 aber auch so justiert werden, dass gleichzeitig beide Nutwände 15 einer Statornut 10 während eines Reinigungsabschnittes abgehobelt werden.

Die Reinigungswerkzeuge 5, 12 bewegen sich dabei zum einen in radialer Richtung durch die Hubbewegung der ersten Kolbenstange 6 und der zweiten Kolbenstange 13 in Pfeilrichtung A auf und ab und hobeln mit ihren Schneidflächen 11 die Epoxyharzreste von der Nutwand 15 der Statornut 10. Zum anderen bewegen sich das erste Reinigungswerkzeug 5 und das zweite Reinigungswerkzeug 12 in axialer Richtung über die gesamte Länge der Statornut 10, da sich der (in Figur 3 nicht dargestellte) Vorrichtungsträger mit dem Bewegungskolben entlang der Nutlänge in axialer Richtung bewegt.

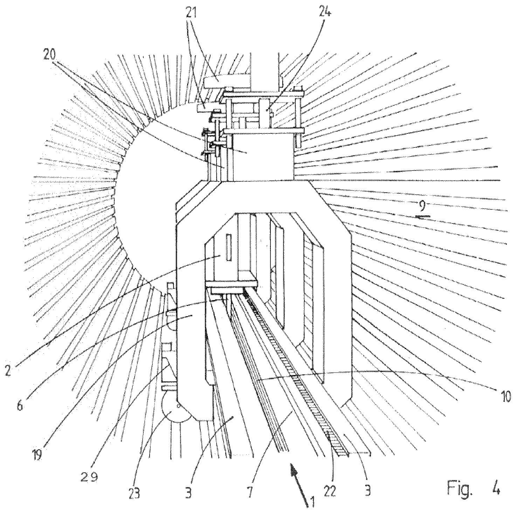

Figur 4 zeigt eine perspektivische Ansicht einer zweiten alternativen Ausführungsform einer erfindungsgemäßen Nutreinigungsvorrichtung 1, die im Inneren eines Stators, umgeben von der Statorblechung 9 aufgebaut ist. Dabei sind die axialen Führungsschienen 3 der Nutreinigungsvorrichtung 1 im Statorinneren parallel zur Statorlängsachse ausgerichtet und der Bewegungskolben 2 ist so auf einer Gleitplatte 7 angeordnet, dass er sich entlang einer Statornut 10 axial verschieben lässt. Im Gegensatz zu der oben beschriebenen Ausführungsform, wird die Stabilität der axialen Führungsschienen 3 im vorliegenden Fall durch mehrere hintereinander angeordnete U- Profilrahmen 19 gewährleistet, die an ihrem offenen U-Ende die axialen Führungsschienen 3 stützen und an ihrem geschlossenen oberen Ende jeweils Zylinder 20 mit Support Kolbenstangen 24 aufweisen, die zum Andrücken von Abstützelementen 21 an der oberen Statorinnenwand dienen. Hierdurch wird maximale Stabilität und Steifigkeit der Vorrichtung während des Reinigungsvorganges und dadurch höchste Präzision erreicht.

Der Bewegungskolben 2 wird dabei auf der Gleitplatte 7 mittels einer Kette 22 in axialer Richtung bewegt, wobei die Nutreinigungsvorrichtung 1 pneumatisch gesteuert ist.

Zum leichteren Manövrieren der U-Profilrahmen 19 in der Statorblechung 9 sind Rollen 23 an den offenen Enden der U-Schenkel vorgesehen. Die U-Profilrahmen 19 werden durch Stützen 29 an der Statorblechung 9 festgestellt.

Während des Betriebs wird der Bewegungskolben 2 mittels der Kette 22 über die gesamte Nutlänge des Stators axial verschoben, wobei das (nicht gezeigte) Reinigungswerkzeug an der Kolbenstange 6 eine radiale Hubbewegung ausführt und dadurch überschüssigen Harzbelag "abhobelt".

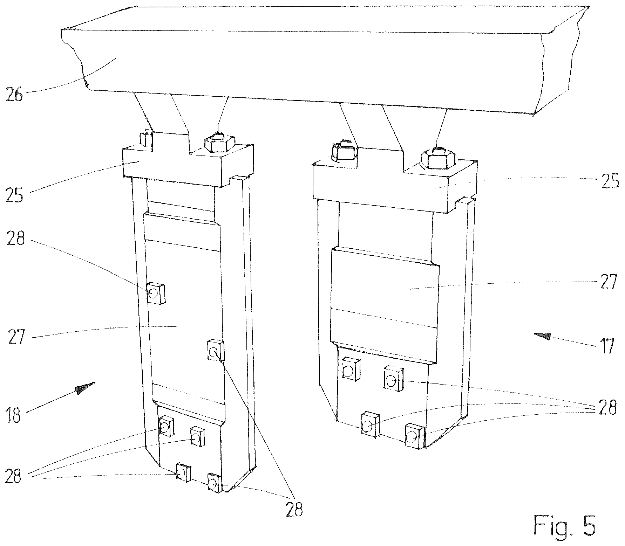

Figur 5 zeigt eine perspektivische Ansicht einer zweiten Ausführungsform von zwei hintereinander angeordneten Reinigungswerkzeugen, einem ersten Reinigungswerkzeug 17 und einem zweiten Reinigungswerkzeug 18. Die Reinigungswerkzeuge 17, 18 sind über Halteschuhe 25 mit einem Werkzeugträger 26 verbunden.

Die Reinigungswerkzeuge 17, 18 bestehen jeweils aus länglichen Metallplatten, die in axialer Richtung bezogen auf die Statorlängsachse an ihrem vorderen und hinteren Ende leicht keilförmig zulaufen und an ihrem in radialer Richtung unteren Ende ebenfalls leicht abgeschrägt sind. An ihrem in radialer Richtung oberen Ende werden die Reinigungswerkzeuge 17, 18 jeweils in eine längliche Nut eines Halteschuhs 25 eingespannt.

Die im wesentlichen planen Bearbeitungsflächen 27 dienen dabei als Träger für Schneidelemente 28, wie sie beispielsweise handelsüblich als Schneiden für Drehmeißel, Fräsköpfe etc. Verwendung finden. Die im wesentlichen viereckigen Schneidelemente 28 werden dabei in hierfür vorgesehene Vertiefungen auf der Bearbeitungsfläche 27 eingebracht und darin verschraubt. Durch eine entsprechende geometrische Anordnung der Schneidelemente 28 wird eine vollständige Flächenabdeckung der Nutfläche gewährleistet und ein rückstandsfreier Abtrag von Harzresten gewährleistet. Die Harzreste fallen dabei durch Ventilationsschlitze des Stators und werden am Ende des Reinigungsvorganges ausgeblasen. Die im vorliegendem Ausführungsbeispiel gezeigten Reinigungswerkzeuge weisen eine Länge von etwa 15 cm auf. Die Länge ist dabei an die entsprechende Nuttiefe angepaßt.

Für eine Anwendung bei hier nicht dargestellten Rotoren wird die Nutreinigungsvorrichtung am Außenumfang des Rotors angebracht.

### Bezugszeichenliste

- 1: Nutreinigungsvorrichtung
- 2: Bewegungskolben
- 3: Axiale Führungsschiene
- 4: Stütze
- 5: Reinigungswerkzeug
- 6: Kolbenstange
- 7: Gleitplatte
- 8: Querstrebe
- 9: Statorblechung
- 10: Statornut
- 11: Schneidfläche
- 12: Zweites Reinigungswerkzeug
- 13: Zweite Kolbenstange
- 14: Vorrichtungsträger
- 15: Nutwand
- 16: Werkzeugkörper
- 17: Erstes Reinigungswerkzeug
- 18: Zweites Reinigungswerkzeug
- 19: U-Profilrahmen
- 20: Zylinder
- 21: Abstützelement
- 22: Kette
- 23: Rolle
- 24: Support Kolbenstange
- 25: Halteschuh
- 26: Werkzeugträger
- 27: Bearbeitungsfläche
- 28: Schneidelement
- 29: Stütze
- A: Hubrichtung

## Patentansprüche

1. Mechanische Nutreinigungsvorrichtung (1) zum Entfernen von Harz aus Nuten, die zur Aufnahme von Rotor- oder Statorwicklungen einer elektrischen Maschine vorgesehen sind, **dadurch gekennzeichnet, dass** die mechanische Nutreinigungsvorrichtung (1) einen, linear durch zwei in axialer Richtung vorgesehenen, parallel angeordneten, Führungsschienen (3) eines Schienenpaars der mechanischen Nutreinigungsvorrichtung (1), beweglichen Vorrichtungsträger (14) mit zumindest einem damit verbundenen Reinigungswerkzeug (5, 17, 18) aufweist, an welchen Führungsschienen (3) der Vorrichtungsträger (14) in Längsrichtung verschiebbar ist, und das Reinigungswerkzeug (5, 17, 18) senkrecht zur von den parallel angeordneten Führungsschienen (3) definierten Führungsfläche auf und ab bewegbar ist und wobei an zwei Außenflächen des Reinigungswerkzeugs (5, 12, 17, 18) Schneidflächen (11) zum Anliegen an einer Nutwand nach links und rechts hervorstehen.

2. Nutreinigungsvorrichtung (1) nach Anspruch 1, wobei die Vorrichtung (1) zumindest einen Hubzylinder (2) zum auf und ab Bewegen des Reinigungswerkzeugs (5) aufweist.

3. Nutreinigungsvorrichtung (1) nach einem der vorstehenden Ansprüche, wobei zwei oder mehr Reinigungswerkzeuge (5, 12, 17, 18) zur parallelen Reinigung vorgesehen sind.

4. Nutreinigungsvorrichtung (1) nach einem der Ansprüche 1 oder 2, wobei zwei oder mehr Reinigungswerkzeuge (5, 12, 17, 18) zur parallelen Reinigung sich gegenüberliegender Nutwände vorgesehen sind.

5. Nutreinigungsvorrichtung (1) nach einem der vorstehenden Ansprüche, wobei Einstellmittel zum Justieren eines Hubs und einer Schnitttiefe des zumindest einen Reinigungswerkzeugs (5, 12, 17, 18) vorgesehen sind.

6. Nutreinigungsvorrichtung (1) nach einem der vorstehenden Ansprüche, wobei Einstellmittel zum Einstellen der Vorschubgeschwindigkeit in Abhängigkeit von der Hubbewegung des zumindest einen Reinigungswerkzeugs (5, 12, 17, 18) vorgesehen sind.

7. Verfahren zum Entfernen von Harz aus Nuten, die zur Aufnahme von Rotor- oder Statorwicklungen einer elektrischen Maschine vorgesehen sind, mit einer mechanischen Nutreinigungsvorrichtung (1) nach Anspruch 1, wobei das Verfahren folgende Schritte aufweist:
a) Mechanisches Abtragen von Harz an einem Nutwandabschnitt mit zumindest einem Reinigungswerkzeug (5, 12, 17, 18);
b) Axialer Vorschub des Vorrichtungsträgers (14) der mechanischen Nutreinigungsvorrichtung (1) in Richtung der Statorlängsachse, wobei die Bewegung des zumindest einen Reinigungswerkzeugs (5, 12, 17, 18) in radialer Richtung bezogen auf die Statorlängsachse und der axiale Vorschub des Vorrichtungsträgers (14) aufeinander abgestimmt sind;
c) Einstellen der Nutmasstoleranzbreite durch Justieren des Reinigungswerkzeuges (5, 12, 17, 18).

8. Verfahren nach Anspruch 7, wobei die Vorschubbewegung schrittweise erfolgt und wobei pro Schritt zumindest eine Hubbewegung des Reinigungswerkzeugs (5, 12, 17, 18) in radialer Richtung durchgeführt wird.

## Claims

1. Mechanical groove-cleaning device (1) for removing resin from grooves which are provided for accommodating rotor or stator windings of an electric machine, **characterized in that** the mechanical groove-cleaning device (1) has a device carrier (14) which is movable linearly by means of two guide rails (3), which are provided in the axial direction and are arranged in parallel, of a pair of rails of the mechanical groove-cleaning device (1), the device carrier having at least one cleaning tool (5, 17, 18) which is connected thereto, on which guide rails (3) the device carrier (14) is displaceable in the longitudinal direction, and the cleaning tool (5, 17, 18) is movable up and down perpendicularly to the guide surface defined by the guide rails (3) arranged in parallel, and wherein cutting surfaces (11) for lying against a groove wall protrude to the left and right on two outer surfaces of the cleaning tool (5, 12, 17, 18).

2. Groove-cleaning device (1) according to Claim 1, wherein the device (1) has at least one lifting cylinder (2) for moving the cleaning tool (5) up and down.

3. Groove-cleaning device (1) according to either of the preceding claims, wherein two or more cleaning tools (5, 12, 17, 18) are provided for the parallel cleaning.

4. Groove-cleaning device (1) according to either of Claims 1 and 2, wherein two or more cleaning tools (5, 12, 17, 18) are provided for the parallel cleaning of opposite groove walls.

5. Groove-cleaning device (1) according to one of the preceding claims, wherein adjustment means are provided for adjusting a lifting length and a cutting depth of the at least one cleaning tool (5, 12, 17, 18).

6. Groove-cleaning device (1) according to one of the preceding claims, wherein adjustment means are provided for adjusting the advancing speed depending on the lifting movement of the at least one cleaning tool (5, 12, 17, 18).

7. Method for removing resin from grooves which are provided for accommodating rotor or stator windings of an electric machine, with a mechanical groove-cleaning device (1) according to Claim 1, wherein the method has the following steps:
a) mechanically removing resin on a groove wall section with at least one cleaning tool (5, 12, 17, 18);
b) axially advancing the device carrier (14) of the mechanical groove-cleaning device (1) in the direction of the longitudinal axis of the stator, wherein the movement of the at least one cleaning tool (5, 12, 17, 18) in the radial direction with respect to the longitudinal axis of the stator and the axial advancing of the device carrier (14) are coordinated with each other;
c) adjusting the groove dimensional tolerance width by adjustment of the cleaning tool (5, 12, 17, 18).

8. Method according to Claim 7, wherein the advancing movement takes place in a stepwise manner, and wherein at least one lifting movement of the cleaning tool (5, 12, 17, 18) in the radial direction is carried out per step.

## Revendications

1. Ensemble mécanique (1) pour le nettoyage de rainure, destiné à retirer de la résine de rainure prévues pour reprendre des enroulements de rotor ou de stator d'une machine électrique,
**caractérisé en ce que**
l'ensemble mécanique (1) de nettoyage de rainure présente un support (14) de dispositif auquel est relié au moins un outil de nettoyage (5, 17, 18) et apte à se déplacer linéairement sur deux rails de guidage (3), prévus dans la direction axiale et disposés parallèlement l'un à l'autre, d'une paire de rails de l'ensemble mécanique (1) de nettoyage de rainure,
le support (14) de l'ensemble pouvant coulisser dans le sens longitudinal sur ces rails de guidage (3) et l'outil de nettoyage (5, 17, 18) pouvant être relevé et abaissé par rapport à la surface de guidage définie par les rails de guidage (3) disposés parallèlement l'un à l'autre,
des surfaces de coupe (11) destinées à être placées sur une paroi de la rainure débordant vers la gauche et vers la droite de deux surfaces extérieures de l'outil de nettoyage (5, 12, 17, 18).

2. Ensemble (1) de nettoyage de rainure selon la revendication 1, l'ensemble (1) présentant au moins un vérin de levage (2) permettant de relever et d'abaisser l'outil de nettoyage (5).

3. Ensemble (1) de nettoyage de rainure selon l'une des revendications précédentes, dans lequel deux ou plusieurs outils de nettoyage (5, 12, 17, 18) sont prévus pour réaliser un nettoyage en parallèle.

4. Ensemble (1) de nettoyage de rainure selon l'une des revendications 1 ou 2, dans lequel deux ou plusieurs outils de nettoyage (5, 12, 17, 18) sont prévus pour nettoyer en parallèle des parois mutuellement opposées d'une rainure.

5. Ensemble (1) de nettoyage de rainure dans lequel des moyens de réglage qui ajustent la course et la profondeur de coupe du ou des outils de nettoyage (5, 12, 17, 18) sont prévus.

6. Ensemble (1) de nettoyage de rainure dans lequel les moyens de réglage qui permettent d'ajuster la vitesse d'avancement en fonction du déplacement de relèvement du ou des outils de nettoyage (5, 12, 17, 18) sont prévus.

7. Procédé pour retirer de la résine de rainures prévues pour reprendre les enroulements de rotors ou de stator d'une machine électrique à l'aide d'un ensemble mécanique (1) de nettoyage de rainure selon la revendication 1, le procédé comportant les étapes suivantes :
a) enlèvement mécanique de résine sur une section de paroi d'une rainure à l'aide d'au moins un outil de nettoyage (5, 12, 17, 18),
b) avancement axial du support (14) de l'ensemble mécanique (1) de nettoyage de rainure dans la direction de l'axe longitudinal du stator, le déplacement du ou des outils de nettoyage (5, 12, 17, 18) dans la direction radiale par rapport à l'axe longitudinal du stator et l'avancement axial du support (14) de l'ensemble étant accordés l'un à l'autre et
c) ajustement à la tolérance en largeur de la rainure par ajustement de l'outil de nettoyage (5, 12, 17, 18).

8. Procédé selon la revendication 7, dans lequel le déplacement d'avancement s'effectue pas à pas et dans lequel au moins un déplacement de relèvement de l'outil de nettoyage (5, 12, 17, 18) dans la direction radiale a lieu lors de chaque pas.
